# EUROPÄISCHE PATENTSCHRIFT

(11) **EP 0 762 834 B1**
(45) Veröffentlichungstag und Bekanntmachung des Hinweises auf die Patenterteilung: **03.02.1999**
(21) Anmeldenummer: 95914320.7
(22) Anmeldetag: 28.03.1995
(51) Int. Cl.: A23G 3/00

(54) **ZUCKERFREIER FONDANT**
SUGAR-FREE FONDANT
FONDANT SANS SUCRE

(30) Priorität: 30.03.1994 DE 4411584
(43) Veröffentlichungstag der Anmeldung: 19.03.1997
(73) Patentinhaber: "Worlée Sweet" E.H. Worlée & Co. GmbH, 22113 Hamburg (DE)
(72) Erfinder: WEINER, Rudolf, D-90596 Schwanstetten (DE)
(74) Vertreter: UEXKÜLL & STOLBERG
(86) Internationale Anmeldenummer: EP9501164
(87) Internationale Veröffentlichungsnummer: WO9526639

(56) Entgegenhaltungen:
- EP-A- 0 481 940
- WO-A-92/19112
- WO-A-94/21827
- US-A- 4 714 620
- PATENT ABSTRACTS OF JAPAN vol. 13 no. 171 (C-588) ,24.April 1989 & JP,A,64 002534 (TAKEDA CHEM IND.) 6.Januar 1989,

## Beschreibung

Die Erfindung betrifft einen zuckerfreien Fondant zur Verwendung bei der Herstellung von gesüßten Produkten und ein Verfahren zu seiner Herstellung.

Zuckerfondants sind leicht schmelzende Zuckerwaren, die beispielsweise in Formen gegossen, kandiert oder mit Zucker überzogen sind. Sie können mit Nüssen, Mandeln, Likören, Marmelade und dergleichen gefüllt sein. Chemisch sind die Zuckerfondants Dispersionen winziger Saccharosekristalle in gesättigtem Zuckersirup.

Seit längerem wird versucht, zuckerfreie Fondants herzustellen, die kalorienreduziert und für Diabetiker geeignet sind. Bei solchen zuckerfreien Fondants ist der Zucker in der Regel durch Zuckeraustauschstoffe und/oder künstliche Süßstoffe ersetzt. Diese Zuckeraustauschstoffe oder künstliche Süßstoffe enthaltenden Fondants weisen jedoch den Nachteil auf, daß sie häufig einen nicht zu überdeckenden Nebengeschmack mit sich bringen, der die Qualität des Produkts erheblich beeinträchtigt. Weiterhin haftet den bisher bekannten zuckerfreien Fondants oder Fondants mit verringertem Zuckergehalt der Nachteil an, daß ihr Aussehen und ihre Verarbeitungseigenschaften bzw. ihr Verarbeitungsverhalten sich von Zuckerfondants erheblich unterscheidet, z.B. im Lösungs- und Mischungsverhalten sowie im Abschmelzverhalten.

Beispielsweise sind zuckerfreie Fondants bekannt, die etwa 36 % Lactit, 29 % Wasser, 21 % Polydextrose und 14 % Maltitsirup (Pfizer Informationsblatt zu dem Polydextroseprodukt "Litesse", Juli 1991) oder 62,5 Teile Lactit, 7,5 Teile Polydextrose, 19 Teile Maltitsirup und Wasser (Trockensubstanz 89 Gew.-%) (Purac Biochem) enthalten. Auch die Eigenschaft dieser bekannten Fondants lassen noch zu wünschen übrig. Beispielsweise sind sie zu dünnflüssig, zu dickflüssig, zu zäh oder zu klebrig.

Außerdem ist aus der DE-A-42 28 278 ein Fondant bekannt, der 75 bis 90 Gewichtsteile Disaccharidalkohol, insbesondere Isomalt, Maltit und Lycasin, und 10 bis 25 Gewichtsteile Wasser enthält.

Aus der EP-A-0 494 743 ist ferner ein wäßriger Tafelsirup bekannt, der Wasser, Zuckerfeststoff in einer Menge unter 10 Gew.-%, bezogen auf das Gewicht des Sirups, Carboxymethylcellu-loseharz in einer ausreichenden Menge, um die Viskosität bei 21,1 °C auf eienen Bereich von 200 bis 2000 cps einzustellen, und cellulasefreies Xanthanharz in einer ausreichenden Menge, um das Carboxymethylcelluloseharz zu stabilisieren, damit die Viskosität bei einer Lagerung von sechs Monaten bei 21,1 °C nicht mehr als 40 % abnimmt.

Ferner ist aus PAJ, Bd. 13, Nr. 171 (C-588), 24. April 1989 und der JP 64 002534 (Tekada Che. Ind.), 6. Januar 1989, ein Fondant mit geringem Kaloriengehalt und gutem Geschmack bekannt, der hergestellt wird, indem Lactit oder ein im wesentlichen Lactit enthaltender Süßstoff und Wasser zusammen auf 100 bis 200 °C erhitzt werden und dann während der Abkühlung geknetet werden, bzw. Lactit zusammen mit anderen Süßstoffen zur Herstellung eines Fondant mit hoch Kristallinität verwendet wird.

Der Erfindung liegt daher die Aufgabe zugrunde, einen verbesserten zuckerfreien Fondant sowie ein Verfahren zu seiner Herstellung zu liefern, wobei der Fondant in seinem Aussehen, seinen Geschmacks- und Verarbeitungseigenschaften sowie seinem Temperaturverhalten einem Zuckerfondant weitgehend ähnlich ist, dabei aber zuckerfrei, zahnschonend und für Diabetiker geeignet und kalorienreduziert ist.

Diese Aufgabe wird durch einen zuckerfreien Fondant gelöst, der dadurch gekennzeichnet ist, daß er

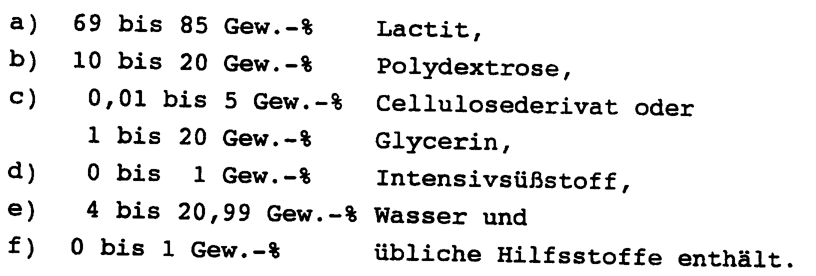

Bevorzugte Ausführungsformen des erfindungsgemäßen zuckerfreien Fondants sind Gegenstand der Unteransprüche.

Überraschenderweise ist gefunden worden, daß das Aussehen und die Eigenschaften von Zuckerfondants trotz Zuckerfreiheit bei einem zuckerfreien Fondant weitgehend nachempfunden werden können. Im Vergleich zu Zuckerfondants weist der erfindungsgemäße Fondant die Vorteile auf, daß er kalorienreduziert, zahnschonend und für Diabetiker geeignet ist, was dadurch erreicht wird, daß er zuckerfrei ist, wobei unter "Zucker" Saccharose, aber auch deren Abbauprodukt Glucose und Fructose und andere Saccharide wie Lactose und dergleichen verstanden werden. Nicht umfaßt hiervon sind Zuckeralkohole wie das erfindungsgemäß verwendete Lactit. Der hierin verwendete Ausdruck "Zuckeralkohole" bezeichnet Kohlenhydrate, bei denen die in Zuckern vorhandene Carbonylfunktion zu einer Hydroxylmethylfunktion reduziert ist. Sie sind damit nicht-reduzierende Polyhydroxyverbindungen. Im Vergleich zu den bekannten zuckerfreien Fondants weist der erfindungsgemäße Fondant den Vorteil auf, daß er in seinem Aussehen, seiner Konsistenz und seinem Lösungsverhalten einem Zuckerfondant ähnlicher ist. Er weist bessere sensorische Eigenschaften, insbesondere ein glatteres Abschmelzverhalten im Mund, ein angenehmeres Mundgefühl durch den auftretenden kühlenden Effekt, und aufgrund seiner mikrokristallinen Struktur eine glänzende Oberfläche und einen optischen Eindruck auf, der mit Zuckerfondant identisch ist. Auch bei der Herstellung weist der erfindungsgemäße zuckerfreie Fondant gegenüber den bekannten Fondants Vorteile auf, da sich seine Struktur (Konsistenz) direkt nach der Herstellung nur verzögert ändert.

Polydextrose ist ein Polymer, das durch Polykondensation von Glucose in Gegenwart von Sorbit und Zitronensäure hergestellt wird (siehe "Handbuch Süßungsmittel: Eigenschaften und Anwendung", Seiten 256 bis 257, 1990 Behr's Verlag, Hamburg).

Das erfindungsgemäß verwendete Lactit ist ein nicht-reduzierender Zuckeralkohol und wird beispielsweise aus Milchzucker (Lactose) durch Hydrierung des Glucoseteils dieses Disaccharides hergestellt. Lactit ist in mehreren Formen im Handel erhältlich, beispielsweise als weiße kristalline Monohydrat-Form oder in Form des Dihydrats. Das Lactit kann teilweise durch andere Zuckeralkohole ersetzt werden, wobei dieser Anteil bis zu 50 Gew.-% betragen kann. Ein solcher zusätzlicher Zuckeralkohol ist insbesondere Xylit.

Der Fondant enthält ferner als Frischhaltemittel oder Feuchtigkeitsregulator Glycerin oder ein Cellulosederivat. Die Menge an Glycerin liegt, falls vorhanden, vorzugsweise im Bereich von 1 bis 15 Gew.-%, insbesondere 2 bis 10 Gew.-% und bevorzugt 2 bis 6 Gew.-%. Wenn der erfindungsgemäße Fondant stattdessen ein Cellulosederivat enthält kommen hierfür Celluloseether wie Carboxymethylcellulose bzw. deren Natriumderivat in Frage, wobei die Menge an dem Cellulosederivat, falls vorhanden, vorzugsweise 0,05 bis 5 Gew.-%, insbesondere 0,1 bis 2 Gew.-%, bevorzugt 0,5 bis 1,5 Gew.-% und bevorzugter 0,5 bis 1 Gew.-% beträgt.

Die Süßkraft des erfindungsgemäßen Fondants kann durch Variation der Mengen an Zuckeralkohol oder alternativ durch Zusatz von Intensivsüßstoff eingestellt werden. In gewissem Umfang hat auch gegebenenfalls vorhandenes Glycerin Einfluß auf die Süßkraft des Fondants. Die Süßkraft des Fondants ohne Intensivsüßstoff entspricht etwa die Hälfte derjenigen von Zuckerfondant.

Der erfindungsgemäße Fondant kann universell anstelle von Zuckerfondant eingesetzt werden, z.B. in Fertigprodukten und Halbfabrikaten wie Fondants für Diabetiker, zuckerfreien Fondants, Fondanteiern, Formfondants, Pfefferminztalern, Pfefferminzbruch, Pralinen, Trüffeln, Pralinenfüllungen, Kuvertüren, Überzugsmassen, Konditoreierzeugnissen (Canacheprodukte), Cremefüllungen für Waffeln und Sahnebonbons.

Der erfindungsgemäße zuckerfreie Fondant weist einen Gehalt an Lactit im Bereich von 69 bis 85 Gew.-% und insbesondere 69 bis 80 Gew.-% auf. Der Gehalt an Polydextrose beträgt 10 bis 20 Gew.% und insbesondere 10 bis 15 Gew.-%, während der Wassergehalt vorzugsweise 5 bis 20 Gew.-% und insbesondere 10 bis 20 Gew.-% beträgt. Sämtliche Gewichtsprozentangaben beziehen sich auf das Gesamtgewicht des Fondants.

Das Gewichtsverhältnis von Polydextrose zu Zuckeralkohol liegt im allgemeinen im Bereich von etwa 1 : 3,5 bis 1 : 8,5, vorzugsweise etwa 1 : 4,6 bis 1 : 8.

Gewünschtenfalls kann der Fondant auch Intensivsüßstoff enthalten. Als Intensivsüßstoff eignen sich alle üblichen Intensivsüßstoffe, wobei Aspartam (L-Aspartyl-L-Phenylalaninmethylester), AceK (Acesulfam-K, das Kaliumsalz des 6-Methyl-1,2,3-oxathiazin-4(3H)-on-2,2-dioxids) oder ein Aspartam und/oder AceK enthaltendes Gemisch und insbesondere Aspartam bevorzugt ist. Der Gehalt an Instensivsüßstoff liegt, falls vorhanden, im Bereich von 0 bis 1 Gew.-% und bevorzugt 0,1 bis 0,5 Gew.-%.

Die üblicherweise verwendeten sonstigen Hilfsstoffe wie beispielsweise Konservierungsmittel können in einer Menge von insgesamt 0 bis 1 Gew.-% vorhanden sein.

Das Verfahren zur Herstellung des erfindungsgemäßen zuckerfreien Fondants besteht darin, daß
a) das Lactit, die Polydextrose, das Cellulosederivat und/oder das Glycerin sowie gegebenenfalls die Hilfsstoffe mit dem Wasser gemischt werden,
b) dieses Gemisch in einem geschlossenen Gefäß unter Rühren auf 75 bis 95 °C erhitzt wird, bis sich alles gelöst hat,
c) unter langsamem Rühren auf 35 bis 60 °C abgekühlt wird,
d) schnell weitergerührt wird, wobei vor oder während des Rührens gegebenenfalls Impfkristalle, Wasser und/oder Intensivsüßstoff zugegeben werden, und
e) das Gefäß entleert wird.

Die trockenen Einsatzmaterialien können vorab in der Anlage gemischt werden und das Wasser wird dann, gegebenenfalls zusammen mit Glycerin, anschließend zugegeben.

In Stufe b) wird vorzugsweise auf 75 bis 90 °C und insbesondere etwa 85 °C erhitzt und die Rührgeschwindigkeit liegt beispielsweise im Bereich von 1000 bis 2000 UPM, insbesondere 1200 bis 1800 UPM und bevorzugt 1500 UPM.

Das Erhitzen in Stufe b) kann beispielsweise mit in das Gefäß eingeführtem heißen Wasserdampf erfolgen, wobei auch die benötigte Menge an Wasser mit dem/in Form von heißem Wasserdampf zugesetzt werden kann, oder durch Verwendung eines Doppelmantels erfolgen, indem heißes Wasser im geschlossenen Mantelkreislauf zirkuliert.

Zur Kühlung in Stufe c) kann ebenfalls ein Doppelmantel verwendet werden, in dem kaltes Wasser im geschlossenen Kreislauf zirkuliert. Die Rührgeschwindigkeit wird in dieser Stufe auf 200 bis 500 UPM, insbesondere 300 bis 400 UPM und bevorzugt 300 UPM gesenkt.

In Stufe c) wird vorzugsweise auf 40 bis 60 °C und insbesondere auf etwa 50 °C abgekühlt.

Gemäß einer bevorzugten Ausführungsform wird das Gefäß nach dem Abkühlen geöffnet und dem Inhalt Impfkristalle (Kristallisationskeime) zugesetzt. Die Impfkristalle bestehen dabei vorzugsweise aus dem verwendeten Zuckeralkohol, dem gegebenenfalls verwendeten Süßstoff oder einem Gemisch beider. Vorzugsweise handelt es sich um feinstvermahlene Pulver. Die Kristallisation setzt vorzugsweise erst nach dem Impfen ein. Beim anschließenden schnellen Rühren wird eine Rührgeschwindigkeit von beispielsweise 1000 bis 3000 UPM, insbesondere 2000 bis 3000 UPM und bevorzugt 3000 UPM verwendet.

Gemäß einer anderen bevorzugten Ausführungsform wird nach dem Abkühlen schnell mit einer Rührgeschwindigkeit von beispielsweise 1000 bis 3000 UPM, insbesondere 2000 bis 3000 UPM und bevorzugt 3000 UPM weitergerührt, wobei zwischenzeitlich erneut Wasser sowie gegebenenfalls Intensivsüßstoff zugesetzt werden. Bei der Wasser-/Intensivsüßstoffzugabe kann der Rührer abgeschaltet werden. Dannach wird schnell weitergerührt. Das gegebenfalls in Stufe d) zugegebene Wasser ist dabei Teil der jeweils zuzugebenden Gesamtwassermenge, so daß sich die anfangs zugesetzte Wassermenge entsprechend verringert.

Anschließend wird das Gefäß möglichst rasch entleert. Die Kristallisation sollte hierbei noch nicht abgeschlossen sein, so daß die Masse noch gießbar ist.

Im folgenden sind eine beispielhafte Grundrezeptur für einen erfindungsgemäßen Fondant angegeben.

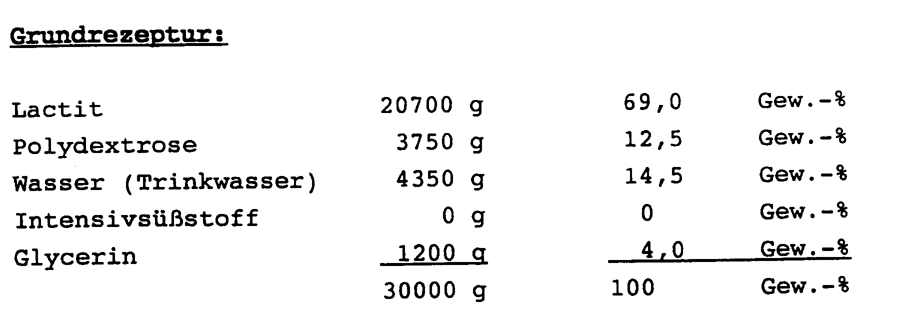

Es wurde ein Gemisch aus Polydextrose und Lactit in dem Produktionsbehälter (Stephan & Söhne, Typ HC 44 Pilot) vorgelegt, zu dem wiederum ein Gemisch aus Glycerin und Wasser gegeben wurde. Dann wurde die Produktionsanlage geschlossen. Anschließend wurde mit 1500 UPM gerührt und mit heißem Wasserdampf auf 85 °C erhitzt. Nachdem die Auflösung der Mischungsbestandteile abgeschlossen war, wurde die Drehzahl auf 300 UPM verringert und die Mischung bei Kühlung mittels Doppelaußenmantel auf 50 °C abgekühlt. Danach wurden die Impfkristalle (Lactit) zugesetzt und anschließend mit 3000 UPM weitergerührt. Anschließend wurde die Anlage entleert.

Beispiele für Zusammensetzungen von erfindungsgemäßen Fondants, die gemäß dem zuvorangegebenen Verfahren hergestellt wurden, sind im folgenden angegeben.

### Beispiel 1

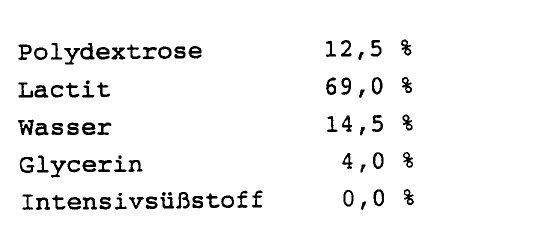

### Beispiel 2

Analog zur angegebenen Herstellungsvorschrift wurde ein Fondant hergestellt, der neben Polydextrose auch CMC (Caboxymethylcellulose) enthielt. Die CMC wurde in dem Wasser vorquellen gelassen und dann anschließend zu dem vorgelegten Lactit gegeben.

Das erhaltene Produkt hatte die folgende Zusammensetzung:

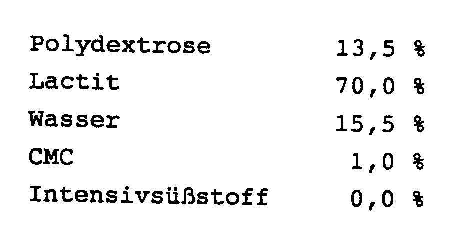

### Beispiel 3

Analog zur angegebenen Herstellungsvorschrift wurde ein Fondant hergestellt, der zusätzlich Intensivsüßstoff enthielt. Der Intensivsüßstoff wurde zusammen mit den Impfkristallen zugesetzt.

Das erhaltene Produkt hatte die folgende Zusammensetzung:

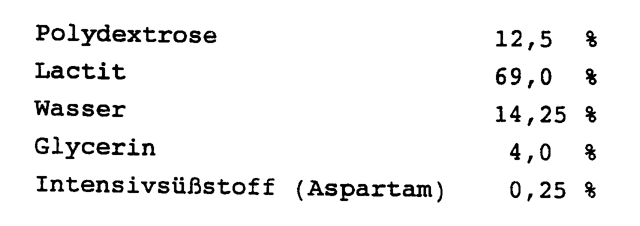

Die Produktmassen der Beispiele 1 bis 3 zeigten alle Eigenschaften, die einen guten Fondant auszeichnen: gute Formbarkeit, weiche Struktur, nicht abreißend, abtrocknende Oberfläche bei feuchtbleibendem Inneren, glänzende oberfläche, gutes Abschmelzverhalten.

## Patentansprüche

1. Zuckerfreier Fondant, dadurch gekennzeichnet, daß er

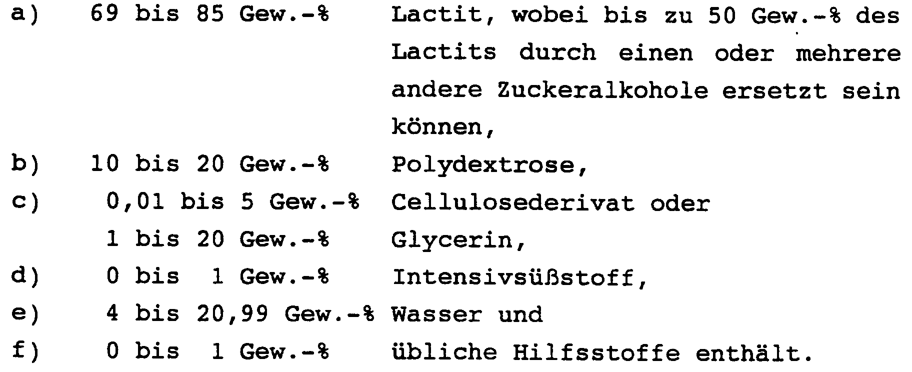

2. Fondant nach Anspruch 1, dadurch gekennzeichnet, daß er jeweils unabhängig voneinander
a) 69 bis 80 Gew.-% Zuckeralkohol,
b) 10 bis 15 Gew.-% Polydextrose und
c) 0,05 bis 5 Gew.-%, insbesondere 0,1 bis 2 Gew.-%, bevorzugt 0,5 bis 1,5 Gew.-% und noch bevorzugter 0,5 bis 1,0 Gew.-% Cellulosederivat oder
1 bis 15 Gew.-%, insbesondere 2 bis 10 Gew.-% und bevorzugt 2 bis 6 Gew.-% Glycerin,
d) 5 bis 20 Gew.-% und insbesondere 10 bis 20 Gew.-% Wasser enthält.

3. Fondant nach Anspruch 1 oder 2, dadurch gekennzeichnet, daß er als Cellulosederivat Carboxymethylcellulose oder deren Na-Salz enthält.

4. Fondant nach Anspruch 1, 2 oder 3, dadurch gekennzeichnet, daß das bis zu 50 Gew.-% des Lactits durch einen oder mehrere andere Zuckeralkohole, insbesondere Xylit ersetzt sind.

5. Fondant nach einem der vorhergehenden Ansprüche, dadurch gekennzeichnet, daß er 0,1 bis 0,5 Gew.-% Intensivsüßstoff enthält, insbesondere Aspartam oder ein Aspartam enthaltendes Gemisch.

6. Verfahren zur Herstellung eines zuckerfreien Fondants gemäß einem der Ansprüche 1 bis 6, dadurch gekennzeichnet, daß
a) das Lactit, die Polydextrose, das Cellulosederivat und/oder das Glycerin sowie gegebenenfalls die Hilfsstoffe mit dem Wasser gemischt werden,
b) dieses Gemisch in einem geschlossenen Gefäß unter Rühren auf 75 bis 95 °C erhitzt wird, bis sich alles gelöst hat,
c) unter langsamem Rühren auf 35 bis 60 °C abgekühlt wird,
d) schnell weitergerührt wird, wobei vor oder während des Rührens gegebenenfalls Impfkristalle, Wasser und/oder Intensivsüßstoff zugegeben werden, und
e) das Gefäß entleert wird.

7. Verfahren nach Anspruch 6, dadurch gekennzeichnet, daß die festen Einsatzmaterialien vorab trocken vermischt werden.

8. Verfahren nach Anspruch 6 oder 7, dadurch gekennzeichnet, daß in b) auf 75 bis 90 °C, insbesondere etwa 85 °C erhitzt wird.

9. Verfahren nach einem der Ansprüche 6 bis 8, dadurch gekennzeichnet, daß in c) auf 40 bis 60 °C und insbesondere etwa 50 °C abgekühlt wird.

10. Verfahren nach einem der Ansprüche 6 bis 9, dadurch gekennzeichnet, daß in d) Impfkristalle aus dem Zuckeralkohol, dem Intensivsüßstoff oder einem Gemisch beider verwendet werden.

11. Verwendung eines Fondants gemäß einem der Ansprüche 1 bis 5 bei der Herstellung von gesüßten Produkten.

## Claims

1. Sugar-free fondant, characterized in that it comprises

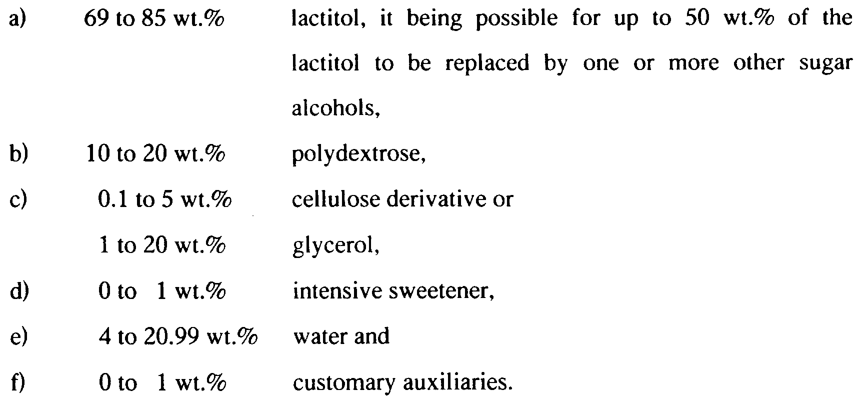

2. Fondant according to claim 1, characterized in that it comprises, in each case independently of one another
a) 69 to 80 wt.% sugar alcohol,
b) 10 to 15 wt.% polydextrose and
c) 0.05 to 5 wt.%, in particular 0.1 to 2 wt.%, preferably 0.5 to 1.5 wt.%, and even more preferably 0.5 to 1.0 wt.% cellulose derivative or
1 to 15 wt.%, in particular 2 to 10 wt.%, and preferably 2 to 6 wt.% glycerol,
d) 5 to 20 wt.%, and in particular 10 to 20 wt.% water.

3. Fondant according to claim 1 or 2, characterized in that it comprises carboxymethylcellulose or the Na salt thereof as the cellulose derivative.

4. Fondant according to claim 1, 2 or 3, characterized in that up to 50 wt.% of the lactitol is replaced by one or more other sugar alcohols, in particular xylitol.

5. Fondant according to one of the preceding claims, characterized in that it comprises 0.1 to 0.5 wt.% intensive sweetener, in particular aspartam or an aspartam-containing mixture.

6. Process for the preparation of a sugar-free fondant according to one of claims 1 to 6, characterized in that
a) the lactitol, the polydextrose, the cellulose derivative and/or the glycerol and, if appropriate, the auxiliaries are mixed with the water,
b) this mixture is heated at 75 to 95ºC in a closed vessel, with stirring, until everything has dissolved,
c) the mixture is cooled to 35 to 60ºC, while stirring slowly,
d) stirring is continued rapidly, seed crystals, water and/or intensive sweetener being added, if appropriate, before or during the stirring, and
e) the vessel is emptied.

7. Process according to claim 6, characterized in that the solid starting materials are mixed in the dry state beforehand.

8. Process according to claim 6 or 7, characterized in that in b) the mixture is heated at 75 to 90ºC, in particular about 85ºC.

9. Process according to one of claims 6 to 8, characterized in that in c) the mixture is cooled to 40 to 60ºC, and in particular about 50ºC.

10. Process according to one of claims 6 to 9, characterized in that in d) seed crystals of the sugar alcohol, the intensive sweetener or a mixture of the two are used.

11. Use of a fondant according to one of claims 1 to 5 in the production of sweetened products.

## Revendications

1. Fondant sans sucre, caractérisé en ce qu'il contient :
a) de 69 à 85 % en poids de lactitol, dans lequel lactitol jusqu'à 50 % en poids peut être substitué par un ou plusieurs autres sucres-alcools,
b) de 10 à 20 % en poids de polydextrose,
c) de 0,01 à 5 % en poids d'un dérivé de cellulose ou
de 1 à 20 % en poids de glycérol,
d) de 0 à 1 % en poids d'un additif à fort pouvoir édulcorant,
e) de 4 à 20,99 % en poids d'eau et
f) de 0 à 1 % en poids d'additifs usuels.

2. Fondant selon la revendication 1, caractérisé en ce qu'il contient indépendamment les uns des autres,
a) 69 à 80 % en poids de sucre-alcool,
b) 10 à 15% en poids de polydextrose et
c) 0,05 à 5 % en poids, en particulier 0,1 à 2 % en poids, préférentiellement 0,5 à 1,5 % en poids et de manière plus préférée 0,5 à 1,0 % en poids d'un dérivé de cellulose ou
1 à 15 % en poids en particulier de 2 à 10 % en poids et préférentiellement de 2 à 6 % en poids de glycérol,
d) de 5 à 20 % en poids et plus particulièrement de 10 à 20 % en poids d'eau.

3. Fondant selon la revendication 1 ou 2, caractérisé en ce que, en tant que dérivé de cellulose, il contient de la carboxyméthylcellulose ou un de ses sels de sodium.

4. Fondant selon la revendication 1, 2 ou 3, caractérisé en ce que jusqu'à 50 % en poids du lactitol sont substitués par un ou plusieurs autres sucres-alcools en particulier par du xylitol.

5. Fondant selon l'une quelconque des revendications précédentes, caractérisé en ce qu'il comprend de 0,1 à 0,5 % en poids d'un additif à fort pouvoir édulcorant, en particulier de l'aspartame ou un mélange contenant de l'aspartame.

6. Procédé de préparation d'un fondant sans sucre selon l'une quelconque des revendications 1 à 6, caractérisé en ce que
a) le lactitol, le polydextrose, le dérivé de cellulose et/ou le glycérol ainsi qu'éventuellement les additifs sont mélangés avec de l'eau,
b) ce mélange est chauffé dans un récipient fermé sous agitation à une température de 75 à 95 °C, jusqu'à dissolution complète,
c) refroidi à 35 à 60 °C sous agitation lente,
d) agité ensuite de façon rapide, des germes de cristallisation de l'eau et/ou un additif à fort pouvoir édulcorant étant ajoutées éventuellement avant ou pendant l'agitation,
e) le récipient est vidé.

7. Procédé selon la revendication 6, caractérisé en ce que les matériaux additionnés solides sont mélangés après séchage.

8. Procédé selon la revendication 6 ou 7, caractérisé en ce que dans l'étape b) on chauffe à une température de 75 à 90 °C en particulier à environ 85 °C.

9. Procédé selon l'une des revendications 6 à 8, caractérisé en ce que dans l'étape c) on refroidit à 40 à 60 °C en particulier à environ 50 °C.

10. Procédé selon l'une des revendications 6 à 9, caractérisé en ce que dans l'étape d) on utilise des germes de cristallisation consistant en l'alcool-sucre, en l'additif à fort pouvoir édulcorant ou en un mélange des deux.

11. Utilisation d'un fondant selon l'une quelconque des revendications 1 à 5 pour la préparation d'un produit édulcoré.
